# EUROPEAN PATENT APPLICATION

(11) **EP 3 041 024 A1**
(43) Date of publication of application: **06.07.2016**
(21) Application number: 14839713.6
(22) Date of filing: 05.08.2014
(51) Int. Cl.: H01H 85/12, H01M 2/10, H01M 2/34

(54) **DIRECT-BATTERY-MOUNT FUSIBLE LINK**

(30) Priority: 26.08.2013 JP 2013174747
(71) Applicant: Sumitomo Wiring Systems, Ltd., Yokkaichi-shi, Mie 510-8503 (JP)
(72) Inventor: SUEYOSHI, Yuuki, Yokkaichi-shi, Mie 510-8503 (JP); MURATA, Tatsuru, Yokkaichi-shi, Mie 510-8503 (JP)
(74) Representative: Horn Kleimann Waitzhofer Patentanwälte PartG mbB
(86) International application number: PCT/JP2014/070552
(87) International publication number: WO 2015/029708

(57) **Abstract**

Provided is a battery direct-mounted fusible link that is to be directly connected to a battery post and has an L-shape extending over a top surface and a lateral surface of a battery, the battery direct-mounted fusible link having a novel structure capable of achieving a more compact size while effectively reducing a risk of rotation with respect to a battery. Only a battery connecting portion (58) to be connected to a battery post (26) is provided in a horizontal portion (20) to be arranged on a top surface (18) of a battery (12), whereas a stud bolt (60) and a load connecting portion (46) to be connected to a load are provided in a vertical portion (24) to be arranged on a lateral surface (22) of the battery (12).

## Description

### Technical Field

The present invention relates to a battery direct-mounted fusible link to be directly mounted to a battery to connect electric wires from an alternator and various loads to the battery.

### Background Art

Conventionally, battery direct-mounted fusible links have been used in automobiles and the like in order to allow electric wires to be connected via fusible portions to a battery without using a fuse box or the like away from the battery. The battery direct-mounted fusible link described in JP 2005-190735A (Patent Document 1), for example, has a structure including a battery connecting portion to be connected to a battery post, a stud bolt for bolt-fixing a connecting terminal provided at an end of an electric wire from an alternator or the like, and load connecting portions for connecting electric wires from various loads such as a motor, electronic components, and the like that are provided in an automobile via fusible portions to a battery.

Incidentally, as also described in Patent Document 1, the battery direct-mounted fusible link is formed in an L-shape having a horizontal portion to be arranged on an upper surface of the battery and a vertical portion to be arranged on a lateral surface of the battery. The horizontal portion and the vertical portion of the battery direct-mounted fusible link are arranged over the edge portion of the upper surface of the battery, thus reducing the size of an arrangement space.

However, batteries to be mounted in automobiles slightly differ in size depending on the types, makers, and the like. Therefore, battery direct-mounted fusible links can be provided with margins in the length of the horizontal portion so as to be capable of being attached to a larger number of types of batteries, and thus are configured such that, even when the battery is large, the horizontal portion goes over the edge portion of the upper surface of the battery and the vertical portion can be arranged on the lateral surface of the battery. However, there is a problem with such a structure in that the horizontal portion significantly projects from the battery to form a large gap between the vertical portion and the lateral surface of the battery if the battery is small, thus causing a decrease in efficiency of the arrangement space. Moreover, as also mentioned in Patent Document 1, in the battery direct-mounted fusible link, the battery connecting portion provided in the horizontal portion is generally fastened to the bolt-shaped battery post of the battery with a bolt. Therefore, if the gap between the vertical portion and the lateral surface of the battery is large, there is a risk that the battery direct-mounted fusible link rotates about the battery post, and thus the reliability of the connection with the battery and the electric wires deteriorates.

In order to address these problems, JP 2009-76409A (Patent Document 2) proposes a structure for preventing the rotation of the battery direct-mounted fusible link by interposing a block-shaped member between the vertical portion and the lateral surface of the battery. Moreover, JP 2010-61813A (Patent Document 3) proposes a structure for preventing the rotation by bringing a bent metal piece into contact with the outer surface of the battery. However, since the gap dimension between the vertical portion and the lateral surface of the battery remains the same in the structures mentioned in Patent Document 2 and Patent Document 3, the problem of the arrangement space cannot be solved, and there is a risk that the size of the arrangement space is further increased due to a newly provided special member.

### Citation List

### Patent Documents

Patent Document 1: JP 2005-190735A
Patent Document 2: JP 2009-76409A
Patent Document 3: JP 2010-61813A

### Summary of Invention

### Technical Problem

The present invention has been achieved in light of the above-described circumstances, and the problem to be solved of the present invention is to provide a battery direct-mounted fusible link having a novel structure capable of achieving a more compact size while effectively reducing a risk of rotation with respect to a battery.

### Solution to Problem

A first aspect of the present invention is a battery direct-mounted fusible link having an L-shape including a horizontal portion to be arranged on a top surface of a battery and a vertical portion to be arranged on a lateral surface of the battery, the battery direct-mounted fusible link being provided with a battery connecting portion to be connected to a battery post of the battery, at least one stud bolt to which a connecting terminal provided at an end of an electric wire is to be fastened, and at least one load connecting portion to be connected to a load, the load connecting portion being coupled via a fusible portion to the battery connecting portion, wherein only the battery connecting portion is provided in the horizontal portion, and the stud bolt and the load connecting portion are provided in the vertical portion.

In the battery direct-mounted fusible link having the structure according to the present invention, only the battery connecting portion to be connected to the battery post is provided in the horizontal portion to be arranged on the upper surface of the battery. This makes it possible to reduce the length dimension of the horizontal portion compared with cases where a stud bolt and the like are also provided in the horizontal portion. As a result, the vertical portion can be arranged nearer to the lateral surface of the battery, thus making it possible to make the arrangement space for the battery direct-mounted fusible link more compact. Since the gap between the vertical portion and the lateral surface of the battery is made small, when the battery direct-mounted fusible link is to rotate about the battery post, the rotation of the battery direct-mounted fusible link can be prevented by the vertical portion coming into contact with the lateral surface of the battery, thus making it possible to improve the reliability of the connection with the battery and the electric wires.

Moreover, since the stud bolt is provided in the vertical portion and projects from the vertical portion in a horizontal direction parallel to the horizontal portion, it becomes unnecessary to form a connecting terminal of the electric wire on a side to be connected to the stud bolt into an L-shape in order to extend the electric wire downward, thus making it possible to simplify the shape of the connecting terminal and to reduce cost.

A second aspect of the present invention is the battery direct-mounted fusible link according to the first aspect, wherein an end of an electric wire to be connected to the load is directly secured to the load connecting portion.

In this aspect, the end of the electric wire is directly secured to the load connecting portion without using a connector or the like. Accordingly, it becomes unnecessary to form a space or the like for accommodating the connector in the battery direct-mounted fusible link, thus reducing the size. It should be noted that as an embodiment of the direct securing of the end of the electric wire, soldering, welding, or the like may be performed or a crimping piece may be provided in the load connecting portion and the end of the electric wire may be crimped, for example.

A third aspect of the present invention is the battery direct-mounted fusible link according to the second aspect, wherein the load connecting portion is provided with a crimping piece for crimping the end of the electric wire to be connected to the load.

With this aspect, the end of the electric wire can be firmly fixed with a simple operation by being crimped.

A fourth aspect of the present invention is the battery direct-mounted fusible link according to any one of the first to third aspects, wherein the stud bolt and the load connecting portion are lined up in a direction in which the vertical portion extends from the horizontal portion.

With this aspect, the stud bolt and the load connecting portion are lined up in the direction in which the vertical portion extends, thus making it possible to stack and compactly dispose the electric wire extending from the stud bolt and the electric wire extending from the load connecting portion.

A fifth aspect of the present invention is the battery direct-mounted fusible link according to any one of the first to third aspects, wherein the stud bolt and the load connecting portion are lined up in a direction orthogonal to a direction in which the vertical portion extends from the horizontal portion.

With this aspect, the electric wire extending from the stud bolt and the electric wire extending from the load connecting portion are disposed in parallel in the horizontal direction, thus making it possible to reduce the risk that the electric wires become tangled with one another.

### Advantageous Effects of the Invention

In the battery direct-mounted fusible link according to the present invention, only the battery connecting portion to be connected to the battery post is provided in the horizontal portion to be arranged on the upper surface of the battery, and the stud bolt and the load connecting portion are provided in the vertical portion to be arranged on the lateral surface of the battery. This makes it possible to reduce the length dimension of the horizontal portion and the gap dimension between the vertical portion and the lateral surface of the battery. As a result, a more compact size can be achieved, and when the rotation about the battery post is to occur, the rotation can be prevented by the vertical portion coming into contact with the lateral surface of the battery, thus making it possible to improve the reliability of the connection with the battery and the electric wires.

### Brief Description of Drawings

FIG. 1 is a front view of a battery direct-mounted fusible link according to a first embodiment of the present invention.
FIG. 2 is a top view of the battery direct-mounted fusible link shown in FIG. 1.
FIG. 3 is a side view of the battery direct-mounted fusible link shown in FIG. 1.
FIG. 4 is a front view of a bus bar to be provided in the battery direct-mounted fusible link shown in FIG. 1.
FIG. 5 is a front view of a battery direct-mounted fusible link according to a second embodiment of the present invention.
FIG. 6 is a bottom view of the battery direct-mounted fusible link shown in FIG. 1.
FIG. 7 is a side view of the battery direct-mounted fusible link shown in FIG. 1.

### Description of Embodiments

Hereinafter, embodiments according to the present invention will be described with reference to the drawings.

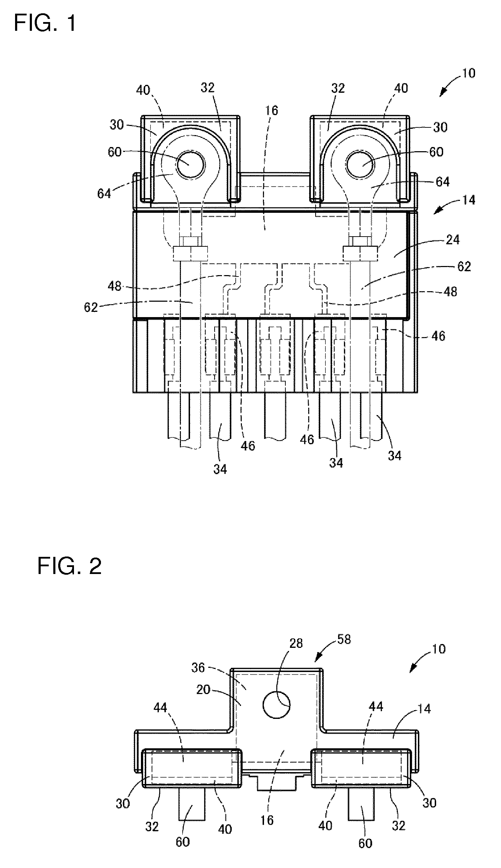

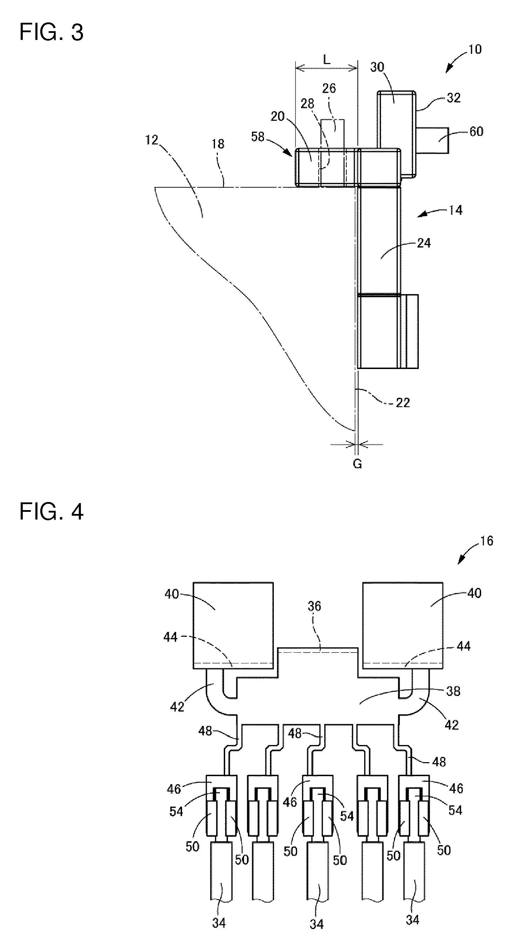

First, a battery direct-mounted fusible link 10 according to a first embodiment of the present invention is shown in FIGS. 1 to 3. As shown in FIG. 3, for example, the battery direct-mounted fusible link 10 is directly fixed to a battery 12 provided in an automobile and is used. The battery direct-mounted fusible link 10 has a structure in which a bus bar 16 is accommodated in a housing 14.

The housing 14 is made of a non-conductive member such as a synthetic resin. The housing 14 is formed in an L-shape including a horizontal portion 20 that is to be arranged along a top surface 18 of the battery 12 and extends in a horizontal direction (left-right direction in FIG. 3), and a vertical portion 24 that extends perpendicularly from the horizontal portion 20 in a vertical up-down direction (up-down direction in FIG. 3) and is arranged along a lateral surface 22 of the battery 12.

As is clear from FIG. 2, the horizontal portion 20 is substantially rectangular. A bolt inserting hole 28 through which a bolt-shaped battery post 26 (see FIG. 3) projecting from the battery 12 is to be inserted is formed in a central portion of the horizontal portion 20.

On the other hand, the vertical portion 24 has a hollow box shape that is open downward (downward in FIG. 1). Two bolt arranging portions 30 are formed at the end portion on an upper side (upper side in FIG. 1) of the vertical portion 24. The bolt arranging portions 30 each have a substantially rectangular block shape protruding upward and are open to their front side 32.

The bus bar 16 is accommodated in this housing 14. FIG. 4 shows the bus bar 16 and electric wires 34 connected to the bus bar 16. The bus bar 16 is formed by bending a punched metal plate.

The bus bar 16 is provided with a battery connecting terminal 36. As also shown in FIG. 2, the battery connecting terminal 36 has a rectangular plate shape formed by being bent at a right angle from a main portion 38 of the bus bar 16, and is provided with a circular bolt inserting hole that penetrates the battery connecting terminal 36 at a position overlapping the bolt inserting hole 28 of the housing 14.

Furthermore, two terminal plate portions 40 are formed in the bus bar 16. The terminal plate portions 40 each have a rectangular plate shape that extends perpendicularly. The terminal plate portions 40 are formed by bending upward the front end-side edge portions of base end portions 44 that are respectively coupled to the front ends of coupling portions 42 extending from the main portion 38 of the bus bar 16 and that extend perpendicularly with respect to the main portion 38. It should be noted that the terminal plate portions 40 are to be connected to an alternator and a starter (not shown), respectively.

Furthermore, the bus bar 16 is provided with a plurality of (five in this embodiment) load connecting portions 46. The load connecting portions 46 each have a shape in which a tab-shaped plate is provided with a pair of crimping pieces 50, and are coupled to the main portion 38 via a fusible portion 48 that fuses when an overcurrent flows. These (five in this embodiment) load connecting portions 46 are formed in parallel with appropriate spacings between them on a lower side (lower side in FIG. 4) of the main portion 38.

The electric wires 34 to be connected to loads provided in a vehicle body, such as a motor and other electric components, are connected to the load connecting portions 46, respectively. The electric wires 34 are directly secured to the load connecting portions 46 without using a connector, a connecting terminal, or the like by crimping a core wire 54 exposed from the end of the electric wire 34 to the load connecting portion 46 with the crimping pieces 50.

The battery direct-mounted fusible link 10 is configured by accommodating this bus bar 16 in the housing 14. The battery connecting terminal 36 of the bus bar 16 is arranged in the horizontal portion 20 of the housing 14 in a state in which the bus bar 16 is accommodated in the housing 14. Accordingly, the battery connecting portion 58 is formed in the horizontal portion 20 of the housing 14. The load connecting portions 46 are coupled via the fusible portions 48 to the battery connecting terminal 36 included in the battery connecting portion 58, and thus are coupled via the fusible portions 48 to the battery connecting portion 58.

The terminal plate portions 40 of the bus bar 16 are arranged in the bolt arranging portions 30 of the housing 14, respectively. Stud bolts 60 are inserted into the bolt arranging portions 30 and overlap the terminal plate portions 40. Accordingly, the stud bolts 60 are arranged in the vertical portion 24 and project in the horizontal direction (left-right direction in FIG. 3). Therefore, in this embodiment, the stud bolts 60 are arranged on the upper side of the vertical portion 24, whereas the load connecting portions 46 are arranged on the lower side of the vertical portion 24, and thus the stud bolts 60 and the load connecting portions 46 are lined up in the direction in which the vertical portion 24 extends (up-down direction in FIG. 1). In the battery direct-mounted fusible link 10 of this embodiment, in this manner, only the battery connecting portion 58 is provided in the horizontal portion 20, and the stud bolts 60 and all of the load connecting portions 46 are provided in the vertical portion 24.

As shown in FIG. 3, the battery post 26 is inserted into the bolt inserting hole 28 of the battery connecting portion 58 and connected thereto by being fastened with a nut or the like, and thus the battery direct-mounted fusible link 10 configured to have this structure is directly fixed to the battery 12 in the state in which the horizontal portion 20 is arranged along the top surface 18 of the battery 12 and the vertical portion 24 is arranged along the lateral surface 22 of the battery 12. As also shown in FIG. 1, the stud bolts 60 are inserted into connecting terminals 64 provided at the ends of electric wires 62 connected to an alternator or the like and are fastened with nuts or the like, and thus the electric wires 62 are connected via the bus bar 16 to the battery 12.

With the battery direct-mounted fusible link 10 of this embodiment, only the battery connecting portion 58 is provided in the horizontal portion 20 to be arranged along the top surface 18 of the battery 12. This makes it possible to reduce the length dimension L of the horizontal portion 20 compared with a case where the stud bolts 60 are also provided in the horizontal portion 20. As a result, the size of the battery direct-mounted fusible link 10 can be reduced, and the efficiency of the arrangement space can be improved. Furthermore, the gap dimension G between the vertical portion 24 and the lateral surface 22 of the battery 12 can be reduced, and when the battery direct-mounted fusible link is to rotate about the battery post 26, the rotation can be prevented by the vertical portion 24 coming into contact with the lateral surface 22 of the battery 12. As a result, it is possible to improve the reliability of the connection between the battery direct-mounted fusible link 10 and the electric wires 34 and 62.

Since the stud bolts 60 are arranged in the vertical portion 24 and project in the horizontal direction, it becomes unnecessary to bend the connecting terminals 64 into an L-shape in order to extend the electric wires 62 connected to the stud bolts 60 downward (toward the lower side in FIG. 1), thus making it also possible to simplify the shape of the connecting terminals 64 and reduce the manufacturing cost.

Furthermore, in this embodiment, the stud bolts 60 and the load connecting portions 46 are lined up in the direction in which the vertical portion 24 extends from the horizontal portion 20, that is, in the up-down direction. This makes it possible to stack and compactly dispose the electric wires 62 connected to the stud bolts 60 and the electric wires 34 connected to the load connecting portions 46.

Moreover, the electric wires 34 to be connected to the load connecting portions 46 are directly secured to the load connecting portions 46 with the crimping pieces 50. Accordingly, connectors, connecting terminals, and the like can be made unnecessary, and the manufacturing cost can be reduced. Furthermore, it is unnecessary to form connector accommodating portions and the like in the housing 14, thus making it possible to reduce the size of the battery direct-mounted fusible link 10.

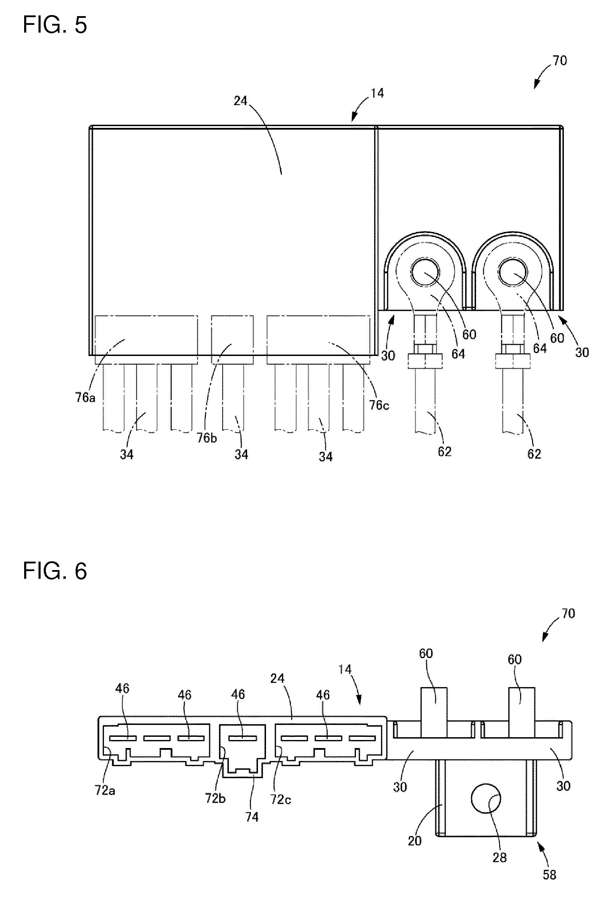

Next, a battery direct-mounted fusible link 70 according to a second embodiment according to the present invention is shown in FIGS. 5 to 7. It should be noted that FIG. 6 shows the lower surface of the battery direct-mounted fusible link 70. Moreover, in the following description, structures similar to those of the first embodiment are denoted in the drawings by the same reference numerals as in the first embodiment, and thus their description will be omitted.

The vertical portion 24 of the housing 14 of this embodiment is formed into a laterally elongated shape as a whole in which the length in the horizontal direction (left-right direction in FIG. 5) is longer. The horizontal portion 20 is located at the end portion on one side (right side in FIG. 6) in the longitudinal direction of the vertical portion 24, and the battery connecting portion 58 is provided in the horizontal portion 20.

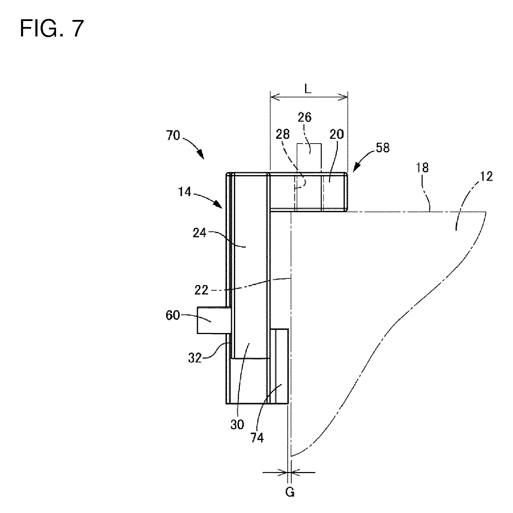

Moreover, the two bolt arranging portions 30 are formed in parallel at the lower end portion of the housing 14 on one side (right side in FIG. 5) in the longitudinal direction. The terminal plate portions 40 (see FIG. 4 etc.) of the bus bar 16 accommodated in the housing 14 are arranged in the bolt arranging portions 30, and the stud bolts 60 project in the horizontal direction (left-right direction in FIG. 7). On the other hand, three connector accommodating portions 72a, 72b and 72c that are open downward are formed at the lower end portion of the housing 14 on a side opposite to the bolt arranging portions 30. It should be noted that a projecting portion 74 that projects in the same direction (downward in FIG. 6) as the direction in which the horizontal portion 20 projects is formed in the connector accommodating portion 72b, which is located at the center. The load connecting portions 46 of the bus bar 16 are arranged inside the connector accommodating portions 72a, 72b and 72c. Accordingly, at the lower end portion of the housing 14, the stud bolts 60 and the load connecting portions 46 of this embodiment are lined up in the horizontal direction, which is orthogonal to the direction (up-down direction in FIG. 5) in which the vertical portion 24 extends from the horizontal portion 20. It should be noted that the load connecting portions 46 of this embodiment are each formed into a tab-shaped plate to which the crimping pieces 50 of the first embodiment are not provided. As also shown in FIG. 5, connectors 76a, 76b and 76c that are provided at the ends of the electric wires 34 are connected to the connector accommodating portions 72a, 72b and 72c, and thus the load connecting portions 46 are connected to the electric wires 34.

As shown in FIG. 7, the battery direct-mounted fusible link 70 of this embodiment is directly fixed to the battery 12 by fixing the battery connecting portion 58 to the battery post 26 as in the first embodiment. Since only the battery connecting portion 58 is formed in the horizontal portion 20, the length dimension L of the horizontal portion 20 can be reduced and the entire size can be made compact, and the gap dimension G between the vertical portion 24 and the lateral surface 22 of the battery 12 can be reduced and the rotation about the battery post 26 can be prevented. In particular, in this embodiment, the connector accommodating portion 72b is provided with the projecting portion 74, and thus the gap dimension G between the vertical portion 24 and the lateral surface 22 of the battery 12 is further reduced.

In the battery direct-mounted fusible link 70 of this embodiment, the stud bolts 60 and the load connecting portions 46 are lined up in the horizontal direction. This makes it possible to dispose the electric wires 62 connected to the stud bolts 60 and the electric wires 34 connected to the load connecting portions 46 in parallel such that they do not overlap one another, and to reduce a risk that the electric wires 62 and 34 are tangled with one another.

Although the embodiments according to the present invention have been described in detail, the present invention is not limited to the specific description. For example, the numbers of the stud bolts and the load connecting portions can be set as desired.

Moreover, as an embodiment of the direct securing of the electric wires to the load connecting portions, the ends of the electric wires may be secured by crimping as described in the above embodiment as well as by soldering or welding, or may be secured using a glue, for example.

### List of Reference Numerals

10, 70: battery direct-mounted fusible link; 12: battery; 14: housing; 16: bus bar; 20: horizontal portion; 24: vertical portion; 26: battery post; 34: electric wire; 46: load connecting portion; 48: fusible portion; 50: crimping piece; 54: core wire; 58: battery connecting portion; 60: stud bolt; 62: electric wire; 64: connecting terminal; 72a, 72b, 72c: connector accommodating portion; 74: projecting portion; 76a, 76b, 76c: connector

## Claims

1. A battery direct-mounted fusible link having an L-shape including a horizontal portion to be arranged on a top surface of a battery and a vertical portion to be arranged on a lateral surface of the battery, the battery direct-mounted fusible link being provided with a battery connecting portion to be connected to a battery post of the battery, at least one stud bolt to which a connecting terminal provided at an end of an electric wire is to be fastened, and at least one load connecting portion to be connected to a load, the load connecting portion being coupled via a fusible portion to the battery connecting portion,
wherein only the battery connecting portion is provided in the horizontal portion, and the stud bolt and the load connecting portion are provided in the vertical portion.

2. The battery direct-mounted fusible link according to claim 1,
wherein an end of an electric wire to be connected to the load is directly secured to the load connecting portion.

3. The battery direct-mounted fusible link according to claim 2,
wherein the load connecting portion is provided with a crimping piece for crimping the end of the electric wire to be connected to the load.

4. The battery direct-mounted fusible link according to any one of claims 1 to 3,
wherein the stud bolt and the load connecting portion are lined up in a direction in which the vertical portion extends from the horizontal portion.

5. The battery direct-mounted fusible link according to any one of claims 1 to 3,
wherein the stud bolt and the load connecting portion are lined up in a direction orthogonal to a direction in which the vertical portion extends from the horizontal portion.
